# EUROPEAN PATENT APPLICATION

(11) **EP 2 735 720 A1**
(43) Date of publication of application: **28.05.2014**
(21) Application number: 12194237.9
(22) Date of filing: 26.11.2012
(51) Int. Cl.: F02F 3/00, F16J 1/08, F16J 9/12

(54) **Piston for combustion engine**

(71) Applicant: Wärtsilä Switzerland Ltd., 8401 Winterthur (CH)
(72) Inventor: Kadau, Dirk, 8046 Zürich (CH); Stark, Matthias, 8400 Winterthur (CH); Herrmann, Kai, 8037 Zürich (CH)
(74) Representative: TBK

(57) **Abstract**

A piston for a combustion engine has at least one ring groove for receiving a piston ring, wherein the ring groove has a piston skirt side lower groove flank which is further away from a piston head than a piston head side upper groove flank of the ring groove, wherein a pattern of recesses is formed in said lower groove flank for accumulating a lubricant. Each recess has a discrete internal volume which is separated from the internal volume of adjacent recesses and has a single opening at its top.

Variations of this arrangement are described, in which either one or both of either of the ring groove flanks and the piston ring flanks is provided with a pattern of recesses.

## Description

The invention relates to a piston for a combustion engine. The piston for a combustion engine is received in a cylinder, is arranged to slide in the cylinder and is coupled to a crankshaft. To improve the use of the pressure of combustion gases in the cylinder, the piston carries one or more piston rings axially distributed at its circumference which form a sliding seal between the piston and the cylinder wall.

In a combustion engine which stands upright, the piston is arranged above the crankshaft, and the combustion chamber is positioned above the piston. When the piston begins to move downward under the pressure of the combustion gases, the piston ring is hit or pressed against the lower flank of a circumferential piston ring groove. This impact may cause wearing of that flank, which leads to a decrease of tightness of the piston ring and of the overall performance of the engine. In order to re-establish the original performance of the engine, an exchange of the piston is required.

In order to cope with this problem, prior art teaches a surface treatment to locally harden the respective flank surface.

It is the object of the invention to suggest an alternative solution to the problem mentioned above. In particular, it is the object of the invention to provide a piston for a combustion engine having wear resistance against wear by the piston ring.

This object is solved with a piston having the features of claim 1. Advantageous modifications of the invention are depicted in the dependent claims.

According to the invention, the piston for a combustion engine is provided having at least one ring groove for receiving a piston ring, wherein the ring groove has a piston skirt side lower groove flank which is further away from a piston head than a piston head side upper groove flank of the ring groove, and a pattern of recesses is formed in said lower groove flank for accumulating a lubricant.

According to the invention, the recesses provided in the lower groove flank are filled with a lubricant such as oil or the like which is applied to the inside surface of the cylinder. This lubricant forms a lubricating film between surfaces of the cylinder and the piston ring(s) or the piston, where they came in abutment contact.

The inventors have found that the lubricant, when accumulated and held in the recesses, slightly bulges upward from the individual recess due to the surface tension of the fluid and the upper edge of the recess. The piston ring which approaches the pattern of recesses from above displaces the lubricant film composed of the bulging lubricant from each individual recess, so that the impact of the contact between the piston ring and the lower groove flank is damped. The damping has the effect that wear due to the impact of the piston ring hitting the lower groove flank is reduced.

Preferably, each recess has a discrete internal volume which is separated from the internal volume of adjacent recesses. In this way, the distribution of the lubricant film over and on the lower groove flank surface can be controlled.

Preferably, each recess has a single opening at its top. In this way the capacity of the individual recesses for holding lubricant in a defined amount is set by the shape/volume of each recess and the holding capacity is less sensitive to dynamic fluid effects in operation of the engine.

Preferably the opening planes of the individual top openings of the recesses of the pattern are arranged on a common plane. In this way, a plain lubricant film on the lower groove flank may be obtained.

Preferably the recesses in the pattern may have a substantially circular cross-sectional shape at their top opening and/or a substantially polygonal cross-sectional shape at their top opening and/or comprise flutes which are preferably arranged in a manner intersecting each other.

Preferably, the surface area of the top opening of the recess is the largest surface area of planes parallel to the opening plane and inside the recess. That is to say, the recesses may have a preferably shallow cup shape such as a dimple, so that the lubricant holding pattern is flushed when the lubricant enters the pattern, so that deposits of carbon can be avoided.

The pattern may preferably be a regular pattern. The regular pattern may comprise similar shaped recesses distributed over the groove flank surface in a regular pattern. The pattern may, however also be composed of differently shaped recesses which are arranged in a controlled manner. For example, the recesses may be arranged in concentric circles around the main axis of the piston, wherein the size of the recesses within a circle is identical, but is different between the individual circles. Also repeated patterns of recesses of different shapes and/or sizes on the groove flank are possible.

The invention is now described by way of presently preferred embodiments under reference to the attached drawings, in which
Fig. 1 shows a detail of a piston which may be equipped with the pattern of recesses according to the invention;
Fig. 2 shows a portion of a section through a piston of one embodiment which is provided with a pattern of polygonal recesses in the groove flank; and
Fig. 3 shows a portion of a section through a piston of another embodiment which is provided with a pattern of circular recesses in the groove flank.

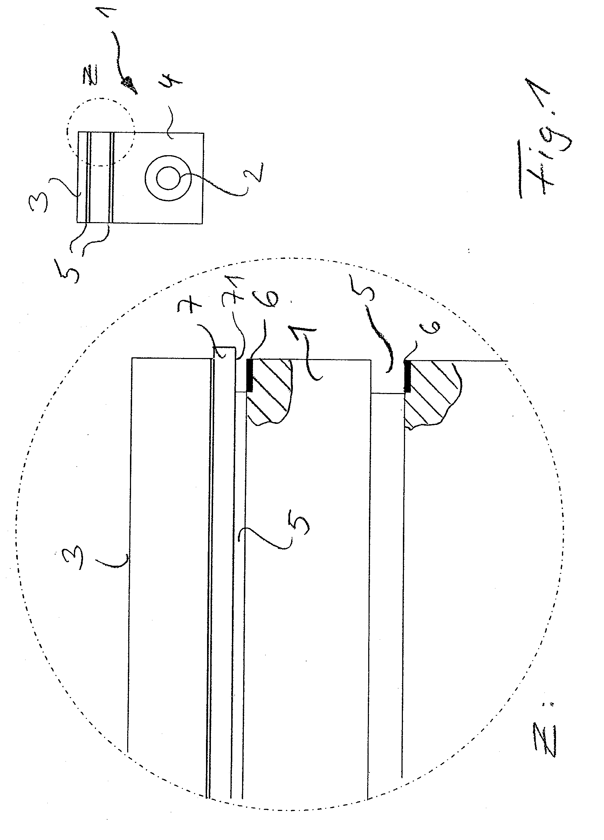

Fig. 1 shows in its upper right corner a piston 1 for use in a combustion engine. The piston 1 has a piston pin boss 2, a piston head 3, a piston skirt 4 and piston ring grooves 5 extending in and along the circumferential surface of the piston 1.

Although not shown here, the piston may have only one or more than two piston ring grooves. Also, different shapes or configurations of the piston pin boss and of the piston head are possible for use with the invention. It is sufficient if the piston has at least one piston ring groove and that there is a piston ring arranged in the groove such that it has ring surface opposing the groove flank.

The left part of Fig. 1 shows an enlarged portion Z of the piston 1 shown in the upper right of Fig. 1. Here, it can be seen that the piston 1 has two piston ring grooves 5 extending parallel to each other and along the circumference of the piston 1. In the upper piston ring groove 5, there is shown a piston ring 7 which is arranged to slightly and resiliently extend from the piston ring groove 5 in radial direction outward from the piston 1. In this way, the piston ring 7 -when in use- contacts the inner surface of the cylinder bore or lining and provides for the sealing function. The piston ring 7 is shown in Fig. 1 in a schematic manner only. Despite different shapes, slits or the like which are provided with or in a piston ring, the lower surface 71 of the piston ring 7 should be a substantially smooth and planar surface. Needless to say that the second ring groove 5 can also receive a piston ring in it and that the groove flank 6 of both ring grooves is treated/shaped/prepared in the same manner as is described below.

This smooth lower surface 71 of the piston ring 7 is arranged to be opposed to the lower groove flank 6, which is on the piston skirt side of the ring groove 5. In Fig. 1 the respective groove flank 6 is marked; it is noted here that the portion 6 of the piston 1 is not a separate element here but is a part of the piston material. It is possible that the lower groove flank is formed by an insert or a different material layer, which may be applied to the groove flank by various technologies such as sputtering, plasma spraying, vapour deposition technologies (CVD and PVD), overlay welding, chrome-plating, galvanizing, metal-spraying or the like. Alternatively, the portion 6, i.e. the groove flank surface may be a part of the piston material having passed a special material treatment like hardening or the like.

In the following, the description is made with respect to a groove flank 6 which consists of the same material as the piston 1.

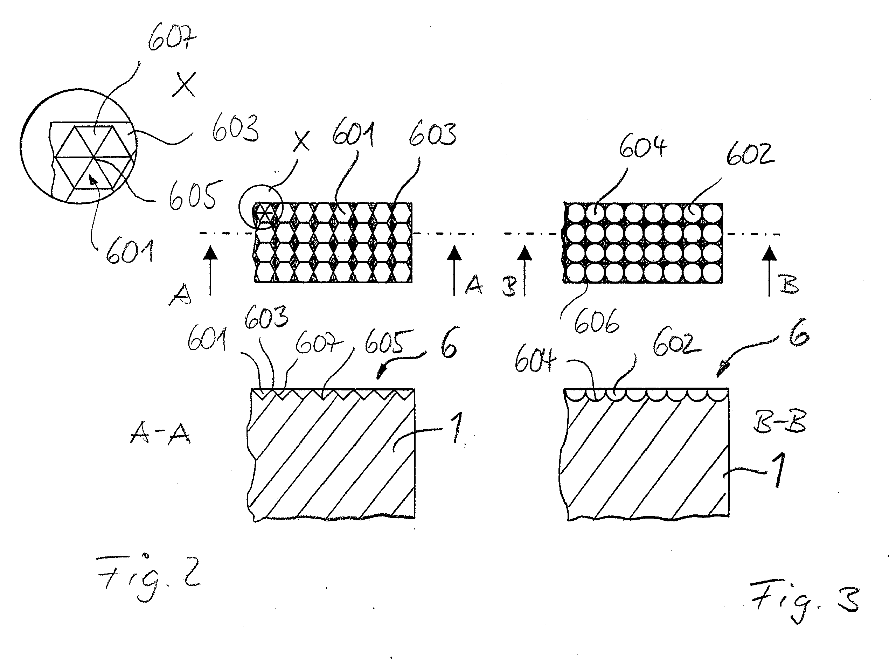

With regard to Fig. 2, a portion of a first embodiment of the groove flank in the piston of the invention is shown in a top view and in a section view as seen in a section plane A-A in Fig. 2.

The groove flank 6 of which only a part is shown in Fig. 2 has a surface covered with recesses 601. The ring groove is cut into the piston as is indicated by references sign 1. Seen form above, the groove flank 6 exhibits a pattern of hexagonal recesses or dimples 601 which are arranged in a regular pattern and in an edge to edge manner. The land around the recesses 601 is indicated with reference sign 602. The land 603 is preferably on the same level throughout the groove flank 6.

When seen in a sectional view on a cutting plane A-A in the direction of the arrows, there is shown a series of shallow recesses which have a hexagonal diamond shape, because the six individual triangular surfaces by which each recess 601 is defined, meet at a common center point below the center point of the hexagonal opening surface of the recess 601.

In the upper left corner of Fig. 2 there is shown a detail X of one of the hexagonal recesses 601 surrounded by land 603 corresponding to the groove flank 6. Six individual triangular shaped surfaces 607 are arranged such that they have a common edge with the adjacent triangular surface and that they have the same inclination, so that they meet at the common center point 605 which is indicated below land 603, as is best seen in the sectional view A-A in Fig. 2. As a result, the groove flank 6 in this embodiment has a plurality of substantially diamond-shaped hexagonal recesses 601 arranged next to each other in a regular pattern.

Instead of the hexagonal pattern any other polygon shape can be taken as the basic shape of the recesses; in particular, if a regular pattern is wished, octagonal diamond shaped recesses are an equal option.

Fig. 3 shows a further embodiment of the groove flank 6 in a top view and in a sectional view on a section plane B-B as seen in the directions of the arrows. As can be seen in Fig. 3, the groove flank is provided with a plurality of recesses 602 having a hemisphere shape. Accordingly, the opening surface of the recesses or hemispheric dimples 602 is circular. The recesses 602 are surrounded by land 606 which corresponds to the groove flank 6. The volume of the respective recess 602 is defined by a hemispherical surface which has a center 604 which lies below the land 606 between the recesses 602. The level of the land 606 corresponds to that of the groove flank 6 in this embodiment. In Fig. 3 there is also shown a regular pattern of recesses 602.

In both embodiments, the volume and the distribution of the recesses 601 or 602 is selected such that in the operation of the piston 1 in an engine the recesses 601; 602 hold and/or accumulate an amount of lubricant which is large enough to provide dampening the impact by the opposed piston ring 7 hitting against the respective piston ring groove flank 6.

Furthermore, although not shown in the drawings, the recesses may have a shape which is a combination of a substantially polygonal opening and a hemispheric-shaped volume inside the groove flank.

The above embodiments were only chosen for description purpose and are not limiting the scope of this description with regard to at least the following modifications. The recesses may have different shapes and sizes within the pattern, so that an irregular pattern is obtained. The pattern of recesses may also be composed of recesses having the same shape but different sizes so that for example the total volume of the recesses changes in radial direction over the piston ring groove flank.

There are also patterns in which a certain composition of different shapes/sizes of the recesses is made to form a basic pattern and that this pattern is repeatedly arranged in the groove flank.

The recesses may also be in the form of small flutes which extend in circumferential direction of the piston and parallel to each other. These flutes may be interrupted by small portions of land which is on the level of the groove flank. Alternatively, one or more spiral flutes surrounding the piston's central axis may be provided instead or in addition to flutes and/or recesses.

Whatever shape or size the recesses and/or flutes may have, it is not necessary that a fully controlled shaping process is required. In that respect, a random distribution and formation of shapes and depth of the individual recesses is acceptable.

The recesses and/or the flutes may be manufactured, for example, by embossing, engraving, spark erosion, machining, drilling, scratching, blasting methods like sandblasting, water-cutting or other technologies.

In the above description, presently preferred embodiments are described in which one ring groove flank has a particular (surface) structure having recesses in order to allow a dampening effect by way of a lubricant cushion formed by aid of the surface structure. It is, however conceivable that the opposite, i.e. the piston head side upper piston ring groove flank according to the above definition is either as well or only provided with that surface structure having the recesses as is described above. In other words, the particular surface structure having a pattern of recesses may be provided on either one of the groove flanks or on both of them. Such variations as to which surface is to be provided with the recesses may be of particular interest, if the piston is working in positions different from the vertical orientation above a crankshaft, for example, if it operates inclined to the direction of gravity or even in a hanging arrangement, where the combustion chamber is below the crankshaft.

It is further conceivable that the particular surface structure, i.e. the surface having a pattern of recesses in it as is described above, is provided on the flank of the piston ring opposing the piston ring groove flank. Here, it is possible that the particular surface structure is provided on one or both piston ring flanks.

It is still further conceivable to have combinations of ring groove flanks and piston ring flanks which have the mentioned particular surface structure. In particular, it may be beneficial to have the combination of a smooth surface opposing a structured surface, i.e. a surface having the recesses as is described above. For example, the lower groove flank has recesses, the lower piston ring flank opposing the lower groove flank is smooth, and the upper piston ring flank has the recesses while the opposing upper groove flank is smooth. This constellation may be beneficial in that gravity supports the accumulation or collecting of lubricant in the recesses of the two surfaces, and the opposing smooth surfaces then cooperate with the lubricant films in the recesses to dampen any impact of the piston ring when it in turns hits against the upper and the lower piston groove flank. Of course, an upside down arrangement is conceivable, if the piston is operated in inclined or hanging arrangements.

## Claims

1. Piston (1) for a combustion engine having at least one ring groove (5) for receiving a piston ring (7), wherein the ring groove (5) has a piston skirt side lower groove flank (6) which is further away from a piston head (3) than a piston head side upper groove flank of the ring groove (5), **characterized by** a pattern of recesses (601; 602) formed in said lower groove flank (6) for accumulating a lubricant.

2. Piston according to claim 1, **characterized in that** each recess (601; 602) has a discrete internal volume which is separated from the internal volume of adjacent recesses (601; 602).

3. Piston according to claim 1 or 2, **characterized in that** each recess (601; 602) has a single opening at its top.

4. Piston according to claim 3, **characterized in that** the opening planes of the individual top openings of the recesses (601; 602) of the pattern are arranged on a common plane.

5. Piston according to any one or more of claims 1 to 4, **characterized by** recesses (602) having a substantially circular cross-sectional shape at their top opening.

6. Piston according to claim any one or more of claims 1 to 4, **characterized by** recesses (601) having a substantially polygonal cross-sectional shape at their top opening.

7. Piston according to any one or more of claims 1 to 4, **characterized in that** the recesses comprise flutes which are preferably arranged in a manner intersecting each other.

8. Piston according to claims 5, 6 and/or 7, wherein the pattern comprises a mixture of at least two different shapes of recesses which are selected from recesses having a circular cross sectional shape (602), a polygonal cross sectional shape (601) or a flute shape.

9. Piston according to any one or more of claims 1 to 8, **characterized in that** the surface area of the top opening of the recess (601; 602) is the largest surface area of planes parallel to the opening plane and inside the recess (601; 602).

10. Piston according to any one or more of claims 1 to 9, **characterized in that** said pattern is a regular pattern.
